(19) Europäisches Patentamt
European Patent Office
Office européen des brevets

(11) **EP 4 160 766 A1**

(12) **EUROPEAN PATENT APPLICATION**
published in accordance with Art. 153(4) EPC

(43) Date of publication:
**05.04.2023  Bulletin 2023/14**

(21) Application number: **21812612.6**

(22) Date of filing: **24.05.2021**

(51) International Patent Classification (IPC):
**H01M 10/0525** [(2010.01)]

(52) Cooperative Patent Classification (CPC):
**H01M 4/66; H01M 4/70; H01M 10/0525;**
**H01M 10/0587;** Y02E 60/10; Y02P 70/50

(86) International application number:
**PCT/CN2021/095499**

(87) International publication number:
**WO 2021/238859 (02.12.2021 Gazette 2021/48)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **29.05.2020  CN 202010478297**

(71) Applicant: **BYD Company Limited**
**Shenzhen, Guangdong 518118 (CN)**

(72) Inventors:
• **SUN, Huajun**
  **Shenzhen, Guangdong 518118 (CN)**

• **WANG, Gaowu**
  **Shenzhen, Guangdong 518118 (CN)**
• **LIN, Wensheng**
  **Shenzhen, Guangdong 518118 (CN)**
• **ZHAO, Ling**
  **Shenzhen, Guangdong 518118 (CN)**
• **ZHU, Yan**
  **Shenzhen, Guangdong 518118 (CN)**

(74) Representative: **DehnsGermany Partnerschaft**
**von Patentanwälten**
**Theresienstraße 6-8**
**80333 München (DE)**

(54) **LITHIUM-ION BATTERY, POWER BATTERY MODULE, BATTERY PACK, ELECTRIC VEHICLE, AND ENERGY STORAGE DEVICE**

(57)     The present disclosure provides a lithium ion battery, a power battery module, a battery pack, an electric vehicle and an energy storage device. The lithium ion battery includes a casing and an electrode core packaged in the casing. The electrode core includes a positive electrode sheet, a negative electrode sheet, and a separator located between the positive electrode sheet and the negative electrode sheet. The positive electrode sheet includes a positive electrode current collector and a positive electrode material layer loaded on the positive electrode current collector. Among the positive electrode current collector, the positive electrode material layer, the negative electrode sheet, and the separator, the one with the lowest melting point is defined as an effective component. The effective component meets:

$$80 < d_2 \rho C_p \times \left( \frac{1.12nL}{(n+1)W} + \frac{1.35L}{W} + 0.337n + 4.49 \right) < 2000.$$

EP 4 160 766 A1

**Description**

FIELD

The present disclosure relates to the technical field of lithium ion batteries, and specifically, to a lithium ion battery, a power battery module, a battery pack, an electric vehicle and an energy storage device.

BACKGROUND

Lithium ion batteries, due to their unique characteristics, have found use in more and more fields. Particularly, the power batteries are being developed rapidly. When lithium batteries are used as a main energy supply source for electric vehicles, and especially with the wide use of ternary batteries in recent years, accidents such as fire and explosion occurs from time to time due to thermal runaway of lithium-ion power batteries (overheating, fire, and explosion of the battery due to rapidly changed temperature rise rate caused by the exothermic chain reaction in the battery). In a battery pack, once a battery experiences thermal runaway, the thermal runaway of the adjacent batteries in the battery pack or system, that is, thermal diffusion, is often triggered. As a result, the entire battery pack is out of control, and serious consequences such as fire and explosion may occur. At present, the safety of lithium ion batteries during use is challenged.

SUMMARY

The present disclosure is intended to resolve at least one of the technical problems in the related art to some extent. In view of this, an object of the present disclosure is to provide a lithium ion battery with effectively improved thermal runaway and improved safety during use.

In an aspect of the present disclosure, the present disclosure provides a lithium ion battery. According to an embodiment of the present disclosure, the lithium ion battery includes a casing and an electrode core packaged in the casing. The electrode core includes a positive electrode sheet, a negative electrode sheet, and a separator located between the positive electrode sheet and the negative electrode sheet. The positive electrode sheet includes a positive electrode current collector and a positive electrode material layer loaded on the positive electrode current collector. Among the positive electrode current collector, the positive electrode material layer, the negative electrode sheet, and the separator, the one with the lowest melting point is defined as an effective component. The effective component meets:

$$80 < d_2 \rho C_p \times \left( \frac{1.12nL}{(n+1)W} + \frac{1.35L}{W} + 0.337\mathrm{n} + 4.49 \right) < 2000$$

where n is the layer number of the effective component; L is the dimension of the effective component in a first direction, unit: m; W is the dimension of the effective component in a second direction, unit: m; $d_2$ is the thickness of the effective component, unit: m; $\rho$ is the density of the effective component, unit: $\mathrm{kg/m^3}$; and $C_p$ is the specific heat capacity of the effective component (heat capacity, specific heat capacity and specific heat are used interchangeably herein), unit: J/(Kg·°C) (that is, J/(Kg·K), and J/(Kg·°C) and J/(Kg·K) are used interchangeably herein). The first direction is parallel to the direction in which the current in the effective component is output, and the second direction intersects the first direction. In the lithium ion battery, by rational optimization and design of the layer number, dimensions in different directions and other parameters of the electrode core component, the battery safety is greatly improved. Lithium ion batteries that meets the above conditions effectively reduce the probability of thermal runaway or thermal diffusion of the battery.

In another aspect of the present disclosure, the present disclosure provides a lithium ion battery. According to an embodiment of the present disclosure, the lithium ion battery includes a casing and an electrode core accommodated in the casing. The electrode core includes a positive electrode sheet, a negative electrode sheet, and a separator located between the positive electrode sheet and the negative electrode sheet. The positive electrode sheet includes a positive electrode current collector and a positive electrode material layer loaded on the positive electrode current collector. The positive electrode current collector meets:

$$80 < d_2 \rho C_p \times \left( \frac{1.12nL}{(n+1)W} + \frac{1.35L}{W} + 0.337\mathrm{n} + 4.49 \right) < 2000$$

where n is the layer number of the positive electrode current collector, L is the dimension of the positive electrode current collector in a first direction, unit: m; W is the dimension of the positive electrode current collector in a second direction,

unit: m; $d_2$ is the thickness of the positive electrode current collector, unit: m, $\rho$ is the density of the positive electrode current collector, unit: $kg/m^3$; and $C_p$ is the specific heat capacity of the positive electrode current collector, unit: $J/(Kg \cdot °C)$. The first direction is parallel to the direction in which the current is led out in the positive electrode current collector, and the second direction intersects the first direction.

In another aspect of the present disclosure, the present disclosure provides a power battery module or a battery pack. According to an embodiment of the present disclosure, the power battery module or battery pack includes at least one lithium ion battery as described above. The possibility of thermal runaway and thermal diffusion of the power battery module is significantly reduced, and the safety during use is significantly improved.

In another aspect of the present disclosure, the present disclosure provides an electric vehicle or an energy storage device. According to an embodiment of the present disclosure, the electric vehicle or energy storage device includes the power battery module or the battery pack as described above. The electric vehicle has excellent safety and long service life.

## BRIEF DESCRIPTION OF THE DRAWINGS

Fig. 1 is a schematic structural view of a stacked electrode core according to an embodiment of the present disclosure.
Fig. 2 is a schematic cross-sectional structural view of a positive electrode in Fig. 1 along the line A-A.
Fig. 3 is a schematic structural view of a flattened state of a stacked structure forming a wound electrode core according to an embodiment of the present disclosure.
Fig. 4 is a schematic structural view of a wound electrode core according to an embodiment of the present disclosure.
Fig. 5 is a schematic structural view of a wound electrode core according to an embodiment of the present disclosure.
Fig. 6 is a schematic planar structural view of a wound section in Figs. 4 and 5.
Fig. 7 is a schematic cross-sectional structural view of Fig. 6 along the line B-B.
Fig. 8 is a schematic planar structural view of a wound section according to another embodiment of the present disclosure.

## DETAILED DESCRIPTION

Embodiments of the present disclosure are described in detail below The embodiments described below are exemplary and used only for explaining the present disclosure, and should not be construed as a limitation on the present disclosure. The embodiments in which the specific technique or condition is not specified are implemented according to the technique or condition described in the literature in the art or according to the product specification. The reagents or instruments used do not indicate the manufacturer and are conventional products commercially available.

In an aspect of the present disclosure, the present disclosure provides a lithium ion battery. According to an embodiment of the present disclosure, the lithium ion battery includes a casing and an electrode core packaged in the casing. The electrode core includes a positive electrode sheet, a negative electrode sheet, and a separator located between the positive electrode sheet and the negative electrode sheet. The positive electrode sheet includes a positive electrode current collector and a positive electrode material layer loaded on the positive electrode current collector. Among the positive electrode current collector, the positive electrode material layer, the negative electrode sheet, and the separator, the one with the lowest melting point is defined as an effective component. The effective component meets:

$$80 < d_2 \rho C_p \times \left( \frac{1.12nL}{(n+1)W} + \frac{1.35L}{W} + 0.337\mathrm{n} + 4.49 \right) < 2000$$

where n is the layer number of the effective component; L is the dimension of the effective component in a first direction, unit: m; W is the dimension of the effective component in a second direction, unit: m; $d_2$ is the thickness of the effective component, unit: m; $\rho$ is the density of the effective component, unit: $kg/m^3$; and $C_p$ is the specific heat capacity of the effective component, unit: $J/(Kg \cdot °C)$. The first direction is parallel to the direction in which the current in the effective component is output, and the second direction intersects the first direction. In the lithium ion battery, by rational optimization and design of the layer number, dimensions in different directions and other parameters of the electrode core component, the battery safety is greatly improved. Lithium ion batteries that meets the above conditions effectively reduce the probability of thermal runaway or thermal diffusion of the battery, without newly adding any parts, changing the battery system design, and additionally increasing the cost.

In some embodiments, the effective component meets:

$$100 < d_2 \rho C_p \times \left( \frac{1.12nL}{(n+1)W} + \frac{1.35L}{W} + 0.337\text{n} + 4.49 \right) < 1500.$$

Therefore, the safety of the lithium ion battery is further improved, and the probability of thermal runaway and thermal diffusion is further reduced.

In present disclosure, the lithium ion battery of the present disclosure is obtained by the present inventors after rational design and optimization based on the following two equations and models.

In present disclosure, according to the general heat balance equation:

$$\rho C_p \frac{\partial T}{\partial t} = \nabla^2 (kT) + I(E - U) - IT \frac{\partial E}{\partial T}$$

The boundary condition is:

$$\left( \frac{\partial T}{\partial n} \right)_{surface} = -\frac{h}{k} (T_{surface} - T_{room})$$

where $\rho$ represents the density of a predetermined component in the system, T represents the temperature at which the system reaches heat balance, t represents the time, Cp represents the specific heat of a predetermined component, k represents the coefficient of thermal conductivity, Q represents the heat generated, h represents the thermal coefficient of the casing and air, E represents the electromotive force, U represents the terminal voltage, I represents the charging and discharging current, $T_{surface}$ represents the surface temperature of the system, and $T_{room}$ represents room temperature.

The one-dimensional heat diffusion model is:

$$\Delta T(R,t) = \frac{Q/(\rho c \delta)}{4\pi \alpha t} \exp\left( -\alpha m^2 t - \frac{R^2}{4\alpha t} \right)$$

where Q is a heat given at x=0 at the moment t=0, $\triangle$T is the increment of the temperature at a distance x=R from the zero point relative to the room temperature, $\rho$ is the density of the heat conductor, c is the specific heat capacity of the heat conductor, $\delta$ is the thickness of the heat conductor, $\alpha$ is the coefficient of thermal conductivity $\alpha$=k/($\rho$c, k is the coefficient of thermal conductivity of the heat conductor, $m^2$=2h/(k$\delta$).

Based on the above equations and models, combined with the practical research experience of the present inventor, the present disclosure is proposed by the present inventor following the principles below. Thermal runaway is mostly caused by short circuit inside the battery. Once short circuit occurs, the temperature at the short-circuit point rises rapidly, resulting in thermal runaway of the battery, and easily causing fire or explosion. In the lithium ion battery of the present disclosure, by controlling the number, size, and thermodynamic parameters of the effective component in the battery, the short-circuit point is fused quickly when the battery is short-circuited, to cut off the short-circuit point, prevent further heat generation, and ensure that the material does not reach the out-of-control point. This can greatly ensure the safety of the battery, avoid the occurrence of thermal runaway, and greatly improve the safety of the battery.

The lithium ion battery of the present disclosure can be a liquid battery, a solid state battery or a polymer battery. The liquid battery and polymer battery can include a positive electrode sheet, a negative electrode sheet, and a separation film (i.e., separator) between the positive electrode sheet and the negative electrode sheet. Definitely, the electrode core also includes an electrolyte solution. The solid-state battery includes a positive electrode sheet, a negative electrode sheet, and a solid electrolyte layer (i.e. separator) between the positive electrode sheet and the negative electrode sheet.

In some embodiments, the negative electrode sheet may include a negative electrode current collector and a negative electrode material layer loaded on the negative electrode current collector. In such embodiments, among the positive electrode current collector, the positive electrode material layer, the negative electrode current collector, the negative electrode material layer and the separator, the one with the lowest melting point is defined as an effective component.

In some other embodiments, the negative electrode sheet may be a lithium foil, or a lithium strip. In such embodiments, among the positive electrode current collector, the positive electrode material layer, the lithium foil (or lithium strip), and the separator, the one with the lowest melting point is defined as an effective component.

In some embodiments, the negative electrode sheet can include a porous current collector and a negative electrode active material deposited in the porous current collector. In such embodiments, among the positive electrode current collector, the positive electrode material layer, the porous current collector and the separator, the one with the lowest melting point is defined as an effective component.

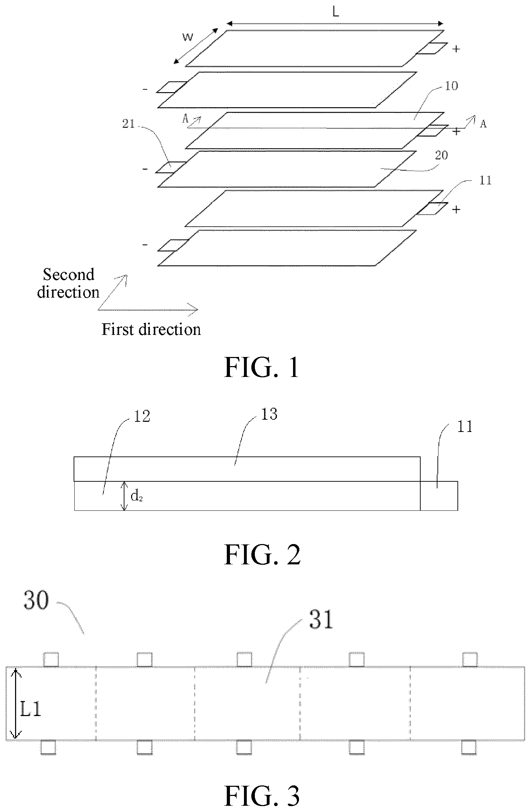

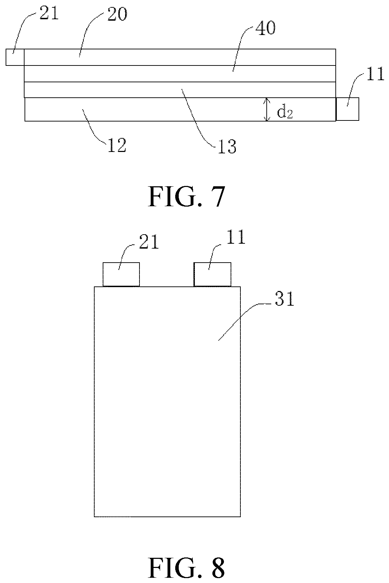

Further, the positive electrode sheet and negative electrode sheet are respectively provided with a positive electrode tab and a negative electrode tab for current output. In some embodiments, the positive electrode tab and the negative electrode are respectively led out from one side of the positive electrode sheet and the negative electrode sheet, and the positive electrode tab and the negative electrode may be arranged at the same side (as shown in Fig. 8), or at opposite sides (as shown in Figs. 1 and 7). The direction in which the tab is led out is the direction in which the current is output.

In the electrode core, multiple positive electrode sheets 10 and negative electrode sheets 20 may be stacked alternately to form a stacked electrode core (as shown in a schematic structural view in Fig. 1), where a separator is provided between adjacent positive electrode sheet and negative electrode sheet. Alternatively, the positive electrode sheet, the separator, and the negative electrode sheet are stacked, and then wound to form a wound electrode core (as shown in the schematic structural view in Fig. 2). The specific arrangement can be made reference to conventional techniques, and will not be detailed here again.

It should be noted that referring to Fig. 1, the stacked electrode core includes multiple positive electrode sheets 10 and negative electrode sheets 20 stacked alternately, and a separator (not shown) is provided between adjacent positive electrode sheet 10 and negative electrode sheet 20. In this case, n is the number of the effective component stacked, L is the dimension of the effective component in the first direction, and W is the dimension of the effective component in the second direction, $d_2$ is the thickness of the effective component (the dimension in the stacking direction).

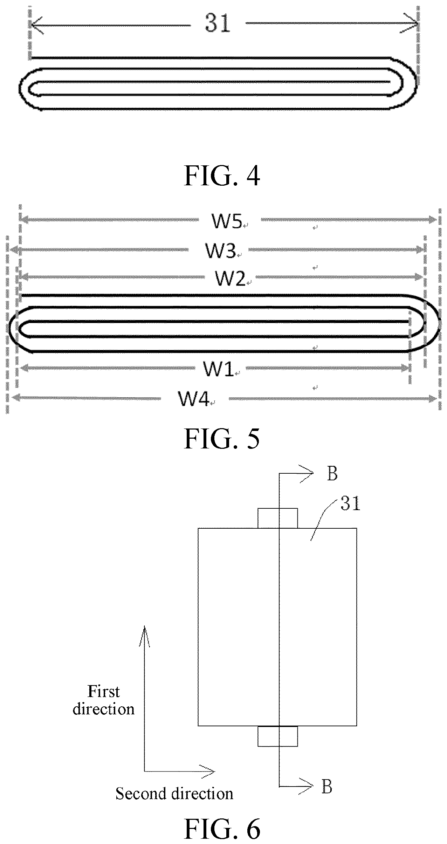

Referring to Figs. 3, 4, 5, 6 and 7, in the wound electrode core, the positive electrode sheet 10, the negative electrode sheet 20 and the separator 40 are stacked and then wound. In some embodiments, the positive electrode sheet 10, the separator 40 and the negative electrode sheet 20 that are stacked in sequence are defined as a stacked body 30. The stacked body 30 is divided into multiple successively connected winding segments 31 (see Fig. 3). When wound, the multiple winding segments 31 are stacked sequentially (see Fig. 4). In this case, n is the number of the winding segments (or twice the number of the winding turns of the effective component), L is the dimension of the effective component in one winding segment in the first direction, W is the average dimension of the effective components in the multiple winding segments in the second direction, and $d_2$ is the thickness of the effective component in one winding section.

Further, it should also be noted that, the second direction intersecting the first direction described herein is that the angle between the first direction and the second direction can be greater than 0 degrees and less than or equal to 90 degrees. In some embodiments, the angle between the first direction and the second direction can be 90 degrees, that is, the first direction is perpendicular to the second direction.

In some embodiments, according to the materials commonly used in various components of the lithium ion battery, the melting point of the positive electrode current collector is generally lower. When the positive electrode current collector is fused upon thermal runaway, the electrode material is not out of control, thus greatly ensuring the safety of the battery. Among the various forms of short circuits inside the battery that lead to thermal runaway, for example, the short circuit between the positive and negative materials, the short circuit between the positive electrode current collector and the negative electrode sheet, and the short circuit between the negative electrode current collector and the positive electrode sheet. The heat generated is the maximum, when the positive electrode current collector is in contact and short-circuited with the negative electrode material. It is found that once short circuit occurs, the temperature at the short-circuit point can rise rapidly to 200°C, causing the material to be of control, and easily causing the fire or explosion. In the lithium ion battery of the present disclosure, to achieve the fundamental purpose that the material does not reach the out-of-control point when the short-circuit point is fused, the positive electrode current collector is used as the effective component, to effectively avoid thermal runaway and thermal diffusion, and greatly improve the safety of the battery.

Hereinafter, the solution of the present disclosure is described in further detail with the positive electrode current collector as the effective component.

According to an embodiment of the present disclosure, referring to Figs. 1 and 2, a positive electrode tab 11 is led out from one side of the positive electrode sheet 10. In some embodiments, the direction in which the positive electrode tab is led out is the direction in which the current is output in the positive electrode current collector. Therefore, the first direction is parallel to the direction in which the positive electrode tab is led out.

In some embodiments, the positive electrode tab can be welded to the positive electrode current collector, or cut from the positive electrode current collector (that is, the positive electrode tab is integrally formed with the positive electrode current collector). It should be noted that no matter how the positive electrode tab is led out from the positive electrode current collector, the dimension of the positive electrode current collector in the first direction does not include the dimension of the positive electrode tab in the first direction. It can be understood that the condition of the negative electrode tab can be the same as that of the positive tab, and will not be detailed here again.

Further, the second direction can be selected according to the actual situation. In some embodiments, the second direction is perpendicular to the first direction. Therefore, a higher degree of matching the above conditions is attained, so the probability of thermal runaway and thermal diffusion is lower, and the safety of the battery is higher.

In some embodiments, referring to Figs. 1 and 2, the electrode core in the lithium ion battery can be a stacked electrode core. The stacked electrode core includes multiple positive electrode sheets 10 and negative electrode sheets 20 stacked alternately. In this case, n is the number of the positive electrode current collector 12 in the multiple positive electrode sheets 10, L is the dimension of the positive electrode current collector 12 in one positive electrode sheet 10 in the first direction, W is the dimension of the positive electrode current collector 12 in one positive electrode sheet 10 in the second direction, and $d_2$ is the thickness of the positive electrode current collector 12 in one positive electrode sheet 10. In the electrode core shown in Figs. 1 and 2, the number n of the positive electrode current collector is 3, L, W, and $d_2$ are as shown in the figure.

In some other embodiments, the electrode core in the lithium ion battery can be a wound electrode core. Referring to Figs. 3 to 7, the wound electrode core is formed by winding a stacked body 30 divided into multiple winding segments 31 connected in sequence. In the wound electrode core, the multiple winding segments 31 are stacked. Each of the winding sections 31 includes a positive electrode sheet 10, a separator 40 and a negative electrode sheet 20 that are stacked in sequence. In this case, n is the number of the winding segment 31, L is the dimension of the positive electrode current collector 12 in one winding section 31 in the first direction, W is the average dimension of the positive electrode current collectors 12 in the multiple winding segments 31 in the second direction, and $d_2$ is the thickness of the positive electrode current collector 12 in one winding segment 31. In the wound electrode core shown in Figs. 3 to 7, n=5, W=(W1+W2+W3+W4+W5)/5, L=L1.

In some embodiments, the material of the positive electrode current collector includes aluminum, such as aluminum foil, and the negative electrode current collector is a copper foil. With rational designs of the battery parameters (the layer number, dimensions in different directions, thickness, specific heat capacity and others of the effective component), in combination with the low melting point of aluminum, it can be effectively ensured that when the short-circuit point is fused, the material is not out of control, thus avoiding the thermal runaway and thermal diffusion, and greatly guaranteeing the safety of the lithium ion battery.

In some embodiments, the thickness $d_2$ of the positive electrode current collector can range from 6 $\mu$m to 15 $\mu$m (for example, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, or 15 $\mu$m). The density $\rho$ of the positive electrode current collector ranges from 2000 kg·m$^{-3}$ to 3000 kg·m$^{-3}$ (for example, 2000 kg·m$^{-3}$, 2100 kg·m$^{-3}$, 2200 kg·m$^{-3}$, 2300 kg·m$^{-3}$, 2400 kg·m$^{-3}$, 2500 kg·m$^{-3}$, 2600 kg·m$^{-3}$, 2700 kg·m$^{-3}$, 2800 kg·m$^{-3}$, 2900 kg·m$^{-3}$, or 3000 kg·m$^{-3}$). The specific heat capacity $C_p$ of the positive electrode current collector ranges from 800 J·kg$^{-1}$·K$^{-1}$ to 900 J·kg$^{-1}$·K$^{-1}$ (for example, 800 J·kg$^{-1}$·K$^{-1}$, 810 J·kg$^{-1}$·K$^{-1}$, 820 J·kg$^{-1}$·K$^{-1}$, 830 J·kg$^{-1}$·K$^{-1}$, 840 J·kg$^{-1}$·K$^{-1}$, 850 J·kg$^{-1}$·K$^{-1}$, 860 J·kg$^{-1}$·K$^{-1}$, 870 J·kg$^{-1}$·K$^{-1}$, 880 J·kg$^{-1}$·K$^{-1}$, 890 J·kg$^{-1}$·K$^{-1}$, or 900 J·kg$^{-1}$·K$^{-1}$). According to this disclosure, $d_2$, $\rho$, and $C_p$ is the thermal characteristic attributes of the positive electrode current collector. As the product of the three increases, the short-circuit point is more difficult to be fused, the risk of becoming out of control is greater. In the ranges defined above, it can be effectively ensured that when the short-circuit point is fused, the material is not out of control, thus well guaranteeing the safety of the battery.

In some embodiments, the layer number n of the positive electrode current collector ranges from 1 to 150 (for example, 1, 10, 20, 30, 40, 50, 60, 70, 80, 90, 100, 110, 120, 130, 140, or 150). n is the total layer number of the positive electrode current collector. As the value of n increases, the heat released upon short circuit increases, and the risk of becoming out of control is greater. In the ranges defined above, the energy density of the battery is guaranteed while the risk of becoming out of control is low.

In some embodiments, the ratio L/w of the dimension L of the positive electrode current collector in the first direction to the dimension W of the positive electrode current collector in the second direction is in the range of 0-30 (for example, 1, 2, 5, 8, 10, 12, 15, 18, 20, 22, 25, 28, or 30). L/w determines the impedance of the positive electrode current collector. The larger the value is, the greater the total heat generated before the electrode core is fused at the short-circuit point will be, and the high the risk of becoming out of control will be. In the ranges defined above, the battery is ensured to operate normally, and the risk of becoming out of control is low.

In some embodiments, in the lithium ion battery of the present disclosure, types of the positive electrode material layer and the negative electrode active material are not particularly limited, and can be flexibly selected and adjusted by those skilled in the art according to actual needs. In some embodiments, the positive electrode material layer may include a lithium iron phosphate material. In some embodiments, the negative electrode sheet includes a negative electrode active material, including at least one of graphite, soft carbon, hard carbon, carbon fibers, mesocarbon microspheres, a silicon based material, a tin-based material and lithium titanate. Therefore, a higher degree of matching the above thermal runaway conditions is attained, and the risk of thermal runaway of the lithium ion battery is lower.

In some embodiments, the lithium ion battery can be a rectangular battery. Further, the length of the lithium ion battery can be 500 mm-2500 mm (for example, 500 mm, 800 mm, 1000 mm, 1500 mm, 1800 mm, 2000 mm, 2200 mm, or 2500 mm). The lithium ion batteries with a shape and size in this range can well match the above thermal runaway conditions. Through the above thermal runaway conditions, the lithium ion battery can be controlled more accurately to have a lower risk of thermal runaway.

It can be understood that in addition to the previously described components, the lithium ion battery can also have necessary structures and components of a conventional lithium ion battery, for example, an electrolyte solution or a solid electrolyte, necessary connection wires, and others may be included. The specific arrangement can be made reference to conventional techniques, and will not be detailed here again.

In some embodiments, multiple electrode cores are packaged in the casing, and the multiple electrode cores are assigned to several electrode core assemblies connected in series. For example, 15 electrode cores are packaged in the casing, and each 5 electrode cores are assigned to one electrode core assembly. Then 3 electrode core assemblies are included in the casing, and the 3 electrode core assemblies are connected in series.

In some embodiments, an encapsulation film is further provided between the casing and the electrode core, where the electrode core is packaged in the encapsulation film. Therefore, the electrode core can be well protected, to avoid the problem of damage, improve the safety of the battery, and extend the service life of the battery.

In another aspect of the present disclosure, the present disclosure provides a lithium ion battery. According to an embodiment of the present disclosure, the lithium ion battery includes a casing and an electrode core accommodated in the casing. The electrode core includes a positive electrode sheet, a negative electrode sheet, and a separator located between the positive electrode sheet and the negative electrode sheet. The positive electrode sheet includes a positive electrode current collector and a positive electrode material layer loaded on the positive electrode current collector. The positive electrode current collector meets:

$$80 < d_2 \rho C_p \times \left( \frac{1.12nL}{(n+1)W} + \frac{1.35L}{W} + 0.337n + 4.49 \right) < 2000$$

where n is the layer number of the positive electrode current collector, L is the dimension of the positive electrode current collector in a first direction, unit: m; W is the dimension of the positive electrode current collector in a second direction, unit: m; $d_2$ is the thickness of the positive electrode current collector, unit: m; $\rho$ is the density of the positive electrode current collector, unit: kg/m$^3$; and $C_p$ is the specific heat capacity of the positive electrode current collector, unit: J/(Kg·°C). The first direction is parallel to the current output direction in the positive electrode current collector, and the second direction intersects the first direction.

It can be understood that the casing, the positive electrode sheet, the negative electrode sheet, and the separator of the lithium ion battery are as described above, and will not be detailed here again.

In another aspect of the present disclosure, the present disclosure provides a power battery module. According to an embodiment of the present disclosure, the power battery module includes at least one lithium ion battery as described above. The possibility of thermal runaway and thermal diffusion of the power battery module is significantly reduced, and the safety during use is significantly improved.

In the power battery module, multiple lithium ion batteries can be connected in series, in parallel or in a hybrid pattern; or some lithium ion batteries are connected to form an assembly, and then multiple assemblies are further connected to form a power battery module. Definitely, it can be designed and selected according to actual needs, and will not be detailed here again.

In another aspect of the present disclosure, the present disclosure provides a battery pack. According to an embodiment of the present disclosure, the battery pack includes at least one lithium ion battery or power battery module as described above. The battery pack has high safety and long service life during use.

In another aspect of the present disclosure, the present disclosure provides an electric vehicle. According to an embodiment of the present disclosure, the electric vehicle includes the battery module or the battery pack as described above. The electric vehicle has excellent safety and long service life.

It can be understood that in addition to the power battery module described earlier, the electric vehicle may further include necessary structures and components for a conventional electric vehicle, for example, the vehicle body, tire, motor, frame, interiors, and so on. The specific arrangement can be made reference to conventional techniques, and will not be detailed here again.

In another aspect of the present disclosure, the present disclosure provides an energy storage device. According to an embodiment of the present disclosure, the energy storage device includes the power battery module or the battery pack as described above. The energy storage device has obviously reduced probability of thermal runaway and thermal diffusion, and thus has excellent safety and long service life.

Embodiments of the present disclosure are described in detail below.

In the following examples and comparative examples, a power battery module is used, which is formed by connecting multiple lithium ion batteries in series. Each lithium ion battery is a stacked battery, in which the positive electrode current collector is an aluminum foil, the positive electrode material is a lithium iron phosphate material, the negative electrode current collector is a copper foil, the negative electrode material is graphite, the separator is a polyolefin separator, the electrolyte solution is an organic electrolyte solution of lithium hexafluorophosphate, the lithium ion battery is a rectangular battery, and the length is 1000 mm.

Performance test

The nail penetration test was carried out following the method as described in "GB/T 31485-2015 Safety requirements and test methods for traction battery of electric vehicle". The nail penetration was as follows:

 □ Charge: At room temperature, a battery cell was discharged to a final voltage of 2.0 V at a current of 1C+0.2C, allowed to stand for 30 min, and then charged to 3.8 Vat a current of 1C+0.2C.
 □ Nail penetration: The battery was penetrated with a high-temperature resistant steel nail having a diameter of φ 5-8 mm and a conical degree of 45°-60° (the nail surface is smooth and free of rust, oxide layer and oil stains), at a speed of $(25\pm5)$ mm/s, from a direction perpendicular to the electrode sheet. The penetration position was conveniently close to the geometric center of the penetrated surface, and the steel nail was left in the battery and observed for 1 hr.

The parameters and test results of each example and comparative example are shown in the following table:

| | Layer number n of positive electrode current collector | Ratio L/W of dimensions of positive electrode current collector in first direction and second direction | Thickness $d_2$ of positive electrode current collector | Density ρ of positive electrode current collector /kg·m$^{-3}$ | Specific heat capacity of positive electrode current collector $C_p$/J·kg$^{-1}$·K$^{-1}$ | A | Nail penetration test result |
|---|---|---|---|---|---|---|---|
| Example 1 | 13 | 14 | 12 μm | 2710 | 880 | 1211.41 | OK, no fire, no explosion, and no influence on adjacent batteries by the penetration |
| Example 2 | 20 | 13 | 12 μm | 3000 | 850 | 1304.99 | OK, no fire, no explosion, and no influence on adjacent batteries by the penetration |
| Example 3 | 30 | 11 | 10 μm | 2200 | 820 | 746.36 | OK, no fire, no explosion, and no influence on adjacent batteries by the penetration |

(continued)

| | Layer number n of positive electrode current collector | Ratio L/W of dimensions of positive electrode current collector in first direction and second direction | Thickness $d_2$ of positive electrode current collector | Density $\rho$ of positive electrode current collector /kg·m⁻³ | Specific heat capacity of positive electrode current collector $C_p$/J·kg⁻¹·K⁻¹ | A | Nail penetration test result |
|---|---|---|---|---|---|---|---|
| Example 4 | 40 | 10 | 10 $\mu$m | 2710 | 880 | 1011.08 | OK, no fire, no explosion, and no influence on adjacent batteries by the penetration |
| Example 5 | 50 | 8 | 8 $\mu$m | 2710 | 880 | 780.77 | OK, no fire, no explosion, and no influence on adjacent batteries by the penetration |
| Example 6 | 8 | 15 | 13 $\mu$m | 2800 | 890 | 1372.60 | OK, no fire, no explosion, and no influence on adjacent batteries by the penetration |
| Example 7 | 3 | 2 | 6 $\mu$m | 2000 | 800 | 94.8576 | OK, no fire, no explosion, and no influence on adjacent batteries by the penetration |
| Comparative Example 1 | 10 | 30 | 12 $\mu$m | 2710 | 880 | 2258.08 | NG, the anti-explosion valve is opened, and thermal runaway occurs |

(continued)

| | Layer number n of positive electrode current collector | Ratio L/W of dimensions of positive electrode current collector in first direction and second direction | Thickness $d_2$ of positive electrode current collector | Density $\rho$ of positive electrode current collector /kg·m$^{-3}$ | Specific heat capacity of positive electrode current collector $C_p$/J·kg$^{-1}$·K$^{-1}$ | A | Nail penetration test result |
|---|---|---|---|---|---|---|---|
| Comparative Example 2 | 40 | 45 | 10μm | 2710 | 880 | 3049.94 | NG, the anti-explosion valve is opened, and thermal runaway occurs |

$$A = d_2 \rho C_p \times \left( \frac{1.12nL}{(n+1)W} + \frac{1.35L}{W} + 0.337n + 4.49 \right)$$

From the test results, it can be seen that when A is greater than 2000, the battery cannot pass the nail penetration test, and thermal runaway occurs. When A is less than 2000 and greater than 80, the battery passes the nail penetration test, and no thermal runaway occurs. It shows that the lithium ion battery that meets the conditions of the present disclosure has lower risk of thermal runaway and higher safety.

In the descriptions of this specification, a description of a reference term such as "an embodiment", "some embodiments", "an example", "a specific example", or "some examples" means that a specific feature, structure, material, or characteristic that is described with reference to the embodiment or the example is included in at least one embodiment or example of the present disclosure. In this specification, schematic descriptions of the foregoing terms are not necessarily directed at the same embodiment or example. Besides, the specific features, the structures, the materials or the characteristics that are described may be combined in proper manners in any one or more embodiments or examples. In addition, a person skilled in the art may integrate or combine different embodiments or examples described in the specification and features of the different embodiments or examples as long as they are not contradictory to each other.

Although the embodiments of the present disclosure are shown and described above, it can be understood that, the foregoing embodiments are exemplary, and cannot be construed as a limitation to the present disclosure. Within the scope of the present disclosure, a person of ordinary skill in the art may make changes, modifications, replacement, and variations to the foregoing embodiments.

## Claims

1. A lithium ion battery, comprising a casing and an electrode core packaged in the casing, the electrode core comprising a positive electrode sheet, a negative electrode sheet, and a separator located between the positive electrode sheet and the negative electrode sheet, and the positive electrode sheet comprising a positive electrode current collector and a positive electrode material layer loaded on the positive electrode current collector, wherein among the positive electrode current collector, the positive electrode material layer, the negative electrode sheet, and the separator, the one with the lowest melting point is defined as an effective component; and the effective component meets:

$$80 < d_2 \rho C_p \times \left( \frac{1.12nL}{(n+1)W} + \frac{1.35L}{W} + 0.337n + 4.49 \right) < 2000$$

wherein n is the layer number of the effective component; L is the dimension of the effective component in a first direction, unit: m; W is the dimension of the effective component in a second direction, unit: m; $d_2$ is the thickness of the effective component, unit: m; $\rho$ is the density of the effective component, unit: kg/m$^3$; and $C_p$ is the specific

heat capacity of the effective component, unit: J/(Kg·°C); the first direction is parallel to the direction in which the current in the effective component is output, and the second direction intersects the first direction.

2.  The lithium ion battery according to claim 1, wherein the effective component meets:

$$100 < d_2 \rho C_p \times \left( \frac{1.12nL}{(n+1)W} + \frac{1.35L}{W} + 0.337\text{n} + 4.49 \right) < 1500.$$

3.  The lithium ion battery according to claim 1 or 2, wherein the effective component is the positive electrode current collector.

4.  The lithium ion battery according to any one of claims 1 to 3, wherein a positive electrode tab is led out from one side of the positive electrode current collector, and the first direction is parallel to the direction in which the positive electrode tab is led out.

5.  The lithium ion battery according to any one of claims 1 to 4, wherein the second direction is perpendicular to the first direction.

6.  The lithium ion battery according to any one of claims 1 to 5, wherein the positive electrode current collector meets at least one of the following conditions:

    the thickness $d_2$ of the positive electrode current collector ranges from 6 $\mu$m to 15 $\mu$m;
    the density $\rho$ of the positive electrode current collector ranges from 2000 kg·m$^{-3}$ to 3000 kg·m$^{-3}$;
    the specific heat capacity $C_p$ of the positive electrode current collector ranges from 800 J·kg$^{-1}$·K$^{-1}$ to 900 J·kg$^{-1}$·K$^{-1}$;
    the layer number n of the positive electrode current collector ranges from 1 to 150; and
    the ratio L/W of the dimension L of the positive electrode current collector in the first direction to the dimension W of the positive electrode current collector in the second direction is in the range of 0-30.

7.  The lithium ion battery according to any one of claims 1 to 6, wherein the material of the positive electrode current collector comprises aluminum.

8.  The lithium ion battery according to any one of claims 1 to 7, wherein the electrode core meets at least one of the following conditions:

    the positive electrode material layer comprises a lithium iron phosphate material;
    the negative electrode sheet comprises a negative electrode active material, and the negative electrode active material comprises at least one of graphite, soft carbon, hard carbon, carbon fibers, mesocarbon microspheres, a silicon based material, a tin-based material and lithium titanate.

9.  The lithium ion battery according to any one of claims 1 to 8, wherein the lithium ion battery meets at least one of the following conditions:

    the lithium ion battery is a rectangular battery, and
    the length of the lithium ion battery is 500-2500 mm.

10. A lithium ion battery, comprising a casing and an electrode core accommodated in the casing, the electrode core comprising a positive electrode sheet, a negative electrode sheet, and a separator located between the positive electrode sheet and the negative electrode sheet, and the positive electrode sheet comprising a positive electrode current collector and a positive electrode material layer loaded on the positive electrode current collector, wherein the positive electrode current collector meets:

$$80 < d_2 \rho C_p \times \left( \frac{1.12nL}{(n+1)W} + \frac{1.35L}{W} + 0.337\text{n} + 4.49 \right) < 2000$$

wherein n is the layer number of the positive electrode current collector, L is the dimension of the positive electrode current collector in a first direction, unit: m; W is the dimension of the positive electrode current collector in a second

direction, unit: m; $d_2$ is the thickness of the positive electrode current collector, unit: m; $\rho$ is the density of the positive electrode current collector, unit: kg/m$^3$; and $C_p$ is the specific heat capacity of the positive electrode current collector, unit: J/(Kg·°C), in which the first direction is parallel to the current output direction in the positive electrode current collector, and the second direction intersects the first direction.

11. The lithium ion battery according to any one of claims 1 to 10, wherein multiple electrode cores are packaged in the casing, and the multiple electrode cores are assigned to several electrode core assemblies connected in series.

12. The lithium ion battery according to any one of claims 1 to 11, wherein an encapsulation film is further provided between the casing and the electrode core, and the electrode core is packaged in the encapsulation film.

13. A power battery module or battery pack, comprising at least one lithium ion battery according to any one of claims 1 to 12.

14. An electric vehicle or an energy storage device, comprising a power battery module or a battery pack according to claim 13.

FIG. 1

FIG. 2

FIG. 3

FIG. 4

FIG. 5

FIG. 6

FIG. 7

FIG. 8

## INTERNATIONAL SEARCH REPORT

International application No.

**PCT/CN2021/095499**

### A. CLASSIFICATION OF SUBJECT MATTER

H01M 10/0525(2010.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 电池, 正极, 熔点, 比热容, 厚度, 热失控, battery, positive electrode, melting point, specific heat capacity, thickness, thermal runaway

### C. DOCUMENTS CONSIDERED TO BE RELEVANT

| Category* | Citation of document, with indication, where appropriate, of the relevant passages | Relevant to claim No. |
|---|---|---|
| A | CN 106170884 A (NISSAN MOTOR CO., LTD.) 30 November 2016 (2016-11-30) description paragraphs 11-142 | 1-14 |
| A | CN 1780030 A (NISSAN MOTOR CO., LTD.) 31 May 2006 (2006-05-31) description, page 2 line 10 to description, page 13 line 14 | 1-14 |
| A | CN 111199106 A (SHANGHAI INSTITUTE OF SPACE POWER-SOURCES et al.) 26 May 2020 (2020-05-26) entire document | 1-14 |
| A | CN 102870253 A (MATSUSHITA ELECTRIC INDUSTRY CO., LTD.) 09 January 2013 (2013-01-09) entire document | 1-14 |
| A | CN 102844908 A (SCHOTT AG) 26 December 2012 (2012-12-26) entire document | 1-14 |
| A | JP 2001167800 A (NGK INSULATORS, LTD.) 22 June 2001 (2001-06-22) entire document | 1-14 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 August 2021** | **23 August 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/095499**

| Patent document cited in search report | | | Publication date (day/month/year) | Patent family member(s) | | | Publication date (day/month/year) |
|---|---|---|---|---|---|---|---|
| CN | 106170884 | A | 30 November 2016 | JP | WO2015156155 | A1 | 13 April 2017 |
| | | | | US | 2017033418 | A1 | 02 February 2017 |
| | | | | EP | 3131150 | A1 | 15 February 2017 |
| | | | | CN | 106170884 | B | 19 September 2017 |
| | | | | JP | 6187676 | B2 | 30 August 2017 |
| | | | | WO | 2015156155 | A1 | 15 October 2015 |
| | | | | US | 10096870 | B2 | 09 October 2018 |
| | | | | KR | 20160130829 | A | 14 November 2016 |
| | | | | KR | 101753023 | B1 | 03 July 2017 |
| CN | 1780030 | A | 31 May 2006 | CN | 100431201 | C | 05 November 2008 |
| | | | | EP | 1659648 | B1 | 11 January 2012 |
| | | | | JP | 5082227 | B2 | 28 November 2012 |
| | | | | US | 7659030 | B2 | 09 February 2010 |
| | | | | EP | 1659648 | A1 | 24 May 2006 |
| | | | | US | 2006127763 | A1 | 15 June 2006 |
| | | | | JP | 2006173095 | A | 29 June 2016 |
| CN | 111199106 | A | 26 May 2020 | None | | | |
| CN | 102870253 | A | 09 January 2013 | JP | 5039245 | B1 | 03 October 2012 |
| | | | | JP | WO2012124273 | A1 | 17 July 2014 |
| | | | | US | 9548477 | B2 | 17 January 2017 |
| | | | | CN | 102870253 | B | 08 April 2015 |
| | | | | US | 2013344376 | A1 | 26 December 2013 |
| | | | | KR | 101346403 | B1 | 10 January 2014 |
| | | | | KR | 20130025390 | A | 11 March 2013 |
| | | | | WO | 2012124273 | A1 | 20 September 2012 |
| CN | 102844908 | A | 26 December 2012 | US | 2013136981 | A1 | 30 May 2013 |
| | | | | CN | 102844908 | B | 01 June 2016 |
| | | | | JP | 2013524418 | A | 17 June 2013 |
| | | | | WO | 2011124347 | A1 | 13 October 2011 |
| | | | | US | 9105908 | B2 | 11 August 2015 |
| | | | | DE | 102010013293 | A1 | 29 September 2011 |
| JP | 2001167800 | A | 22 June 2001 | JP | 3394484 | B2 | 07 April 2003 |
| | | | | JP | 2001167801 | A | 22 June 2010 |
| | | | | JP | 3774095 | B2 | 10 May 2006 |
| | | | | US | 2001003024 | A1 | 07 June 2001 |
| | | | | US | 6596430 | B2 | 22 July 2003 |
| | | | | EP | 1107342 | B1 | 04 March 2009 |
| | | | | EP | 1107342 | A2 | 13 June 2001 |
| | | | | DE | 60041685 | D1 | 16 April 2009 |
| | | | | CA | 2327597 | A1 | 07 June 2001 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 314852015 T